# EUROPÄISCHE PATENTANMELDUNG

(11) **EP 3 878 547 A1**
(43) Veröffentlichungstag der Anmeldung: **15.09.2021**
(21) Anmeldenummer: 20163163.7
(22) Anmeldetag: 13.03.2020
(51) Int. Cl.: B01J 8/06

(54) **REAKTOR UND VERFAHREN ZUR DURCHFÜHRUNG EINER CHEMISCHEN REAKTION**

(71) Anmelder: Linde GmbH, 82049 Pullach (DE); BASF SE, 67056 Ludwigshafen am Rhein (DE)
(72) Erfinder: Posselt, Dr. Heinz, 83043 Bad Aibling (DE); Zellhuber, Dr. Mathieu, 82152 Martinsried (DE); Hofstätter, Martin, 81369 München (DE); Delhomme-Neudecker, Clara, 81825 München (DE); Shustov, Andrey, 67059 Ludwigshafen am Rhein (DE); Jenne, Eric, 67454 Hassloch (DE); Kochendörfer, Kiara Aenne, 68159 Mannheim (DE); Laib, Dr. Heinrich, 67117 Limburgerhof (DE); Jacob, Reiner, 67691 Hochspeyer (DE); Kühn, Heinz-Jürgen, 67593 Westhofen (DE)
(74) Vertreter: DehnsGermany Partnerschaft von Patentanwälten

(57) **Zusammenfassung**

Die vorliegende Erfindung betrifft einen Reaktor (100, 200) zur Durchführung einer chemischen Reaktion, der einen Reaktorbehälter (10) und ein oder mehrere Reaktionsrohre (20) aufweist, wobei in den Reaktorbehälter (10) Stromeinspeiseelemente (41) zur elektrischen Beheizung des oder der Reaktionsrohre (20) geführt sind. Es ist vorgesehen, dass die Stromeinspeiseelemente (41) jeweils einen stabförmigen Abschnitt (43) aufweisen, der jeweils an einem Wanddurchtritt (15) durch eine Wand (14) des Reaktorbehälters (10) verläuft, dass außerhalb des Reaktorbehälters (10) und anschließend an die Wand (14), des Reaktorbehälters (10) durch die die stabförmigen Abschnitte (43) an ihren Wanddurchtritten (15) verlaufen, eine Anschlusskammer (60) angeordnet ist, in die die stabförmigen Abschnitte (43) hineinragen, und dass in der Anschlusskammer (60) Kühlpaneele (61) bereitgestellt sind, die mit einem Kühlfluid durchströmbar sind, und die zwischen zumindest zwei oder zwischen zumindest zwei Gruppen der stabförmigen Abschnitte (43) die in die Anschlusskammer hineinragen, angeordnet sind. Ein entsprechendes Verfahren ist ebenfalls Gegenstand der vorliegenden Erfindung.

## Beschreibung

Die Erfindung betrifft einen Reaktor und ein Verfahren zur Durchführung einer chemischen Reaktion gemäß den Oberbegriffen der unabhängigen Patentansprüche.

### Stand der Technik

In einer Reihe von Verfahren in der chemischen Industrie werden Reaktoren eingesetzt, in denen ein oder mehrere Reaktanden durch beheizte Reaktionsrohre geführt und dort katalytisch oder nichtkatalytisch umgesetzt werden. Die Beheizung dient dabei insbesondere dazu, die benötigte Aktivierungsenergie für die ablaufende chemische Reaktion zu überwinden. Die Reaktion kann insgesamt endotherm oder, nach Überwindung der Aktivierungsenergie, exotherm ablaufen. Die vorliegende Erfindung betrifft insbesondere stark endotherme Reaktionen.

Beispiele für solche Verfahren sind das Steamcracken (Dampfspalten), unterschiedliche Reformierungsverfahren, insbesondere die Dampfreformierung, die Trockenreformierung (Kohlendioxidreformierung), gemischte Reformierungsverfahren, Verfahren zur Dehydrierung von Alkanen und dergleichen. Beim Steamcracken werden die Reaktionsrohre dabei in Form von Rohrschlangen (engl. Coils), die im Reaktor zumindest einen Umkehrbogen aufweisen, durch den Reaktor geführt, wohingegen bei der Dampfreformierung typischerweise ohne Umkehrbogen durch den Reaktor verlaufende Rohre verwendet werden.

Die Erfindung eignet sich für alle derartigen Verfahren und Ausgestaltungen von Reaktionsohren. Rein illustrativ wird hier auf die Artikel "Ethylene", "Gas Production" und "Propene" in Ullmann's Encyclopedia of Industrial Chemistry, beispielsweise die Publikationen vom 15 April 2009, DOI: 10.1002/14356007.a10_045.pub2, vom 15. Dezember 2006, DOI: 10.1002/14356007.a12_169.pub2, und vom 15. Juni 2000, DOI: 10.1002/14356007.a22_211, verwiesen.

Die Reaktionsrohre von entsprechenden Reaktoren werden herkömmlicherweise durch Verwendung von Brennern beheizt. Die Reaktionsrohre werden dabei durch eine Brennkammer geführt, in der auch die Brenner angeordnet sind.

Wie beispielsweise in der DE 10 2015 004 121 A1 (zugleich EP 3 075 704 A1) beschrieben, steigt gegenwärtig jedoch beispielsweise die Nachfrage nach Synthesegas und Wasserstoff, die ohne oder mit reduzierten lokalen Kohlendioxidemissionen hergestellt werden. Diese Nachfrage kann aber durch Verfahren, in denen befeuerte Reaktoren eingesetzt werden, aufgrund der Verfeuerung typischerweise fossiler Energieträger nicht bedient werden. Andere Verfahren scheiden beispielsweise aufgrund hoher Kosten aus. Entsprechendes gilt auch für die Bereitstellung von Olefinen und/oder anderer Kohlenwasserstoffe durch Steamcracken oder Dehydrierung von Alkanen. Auch in solchen Fällen besteht der Wunsch nach Verfahren, die zumindest vor Ort geringere Mengen an Kohlendioxid emittieren.

Vor diesem Hintergrund wird in der erwähnten DE 10 2015 004 121 A1 eine elektrische Beheizung eines Reaktors zur Dampfreformierung zusätzlich zu einer Befeuerung vorgeschlagen. Hierbei werden eine oder mehrere Spannungsquellen verwendet, die eine Dreiphasenwechselspannung an drei Außenleitern bereitstellt oder bereitstellen. Jeder Außenleiter wird an einem Reaktionsrohr angeschlossen. Es wird eine Sternschaltung gebildet, bei der ein Sternpunkt durch einen Sammler realisiert wird, in den die Rohrleitungen einmünden, und mit dem die Reaktionsrohre leitend verbunden sind. Auf diese Weise bleibt der Sammler idealerweise potentialfrei. Der Sammler ist bezogen auf die Vertikale unterhalb sowie außerhalb der Brennkammer angeordnet und erstreckt sich bevorzugt quer zu den Reaktorrohren bzw. entlang der Horizontalen. Die WO 2015/197181 A1 offenbart ebenfalls einen Reaktor, dessen Reaktionsrohre in Sternpunktschaltung angeordnet sind.

Neben der direkten Beheizung von Reaktionsrohren, bei der ein Strom durch die Reaktionsrohre fließt, existieren auch unterschiedlichste Konzepte für die indirekte elektrische Beheizung von Reaktionsrohren. Die indirekte elektrische Beheizung kann, wie unter anderem in der WO 2020/002326 A1 beschrieben, in Form einer externen elektrischen Beheizung erfolgen. Auch eine interne Beheizung ist möglich, wie beispielsweise in der WO 2019/228798 A1 offenbart. Neben einer Widerstands- bzw. Impedanzheizung kann eine induktive elektrische Beheizung des von Reaktionsrohren oder einer Katalysatorschüttung, wie beispielsweise in der WO 2017/072057 A1 beschrieben, erfolgen. Die induktive Beheizung kann beispielsweise ein internes oder externes Heizelement oder die Reaktionsrohre selbst erwärmen. Eine direkte (nicht induktive) Beheizung eines Reaktionsrohrs ist auch in der DE 10 2015 004 121 A1 offenbart. Zur Beheizung sind grundsätzliche Konzepte mit mehrphasigem oder einphasigem Wechselstrom oder mit Gleichstrom realisierbar. Bei der direkten Beheizung von Reaktoren mittels Gleichstrom oder auch mit einphasigem Wechselstrom kann keine Sternschaltung mit einem potentialfreien Sternpunkt realisiert werden, die Stromeinspeisung ist jedoch grundsätzlich in ähnlicher Weise realisierbar. Die vorliegende Erfindung eignet sich für alle Varianten der elektrischen Beheizung.

Insbesondere die Stromeinspeisung hat sich bei derartigen elektrisch beheizten Reaktoren aufgrund der hohen Stromflüsse und Temperaturen als herausfordernd erwiesen. Die Erfindung stellt sich daher die Aufgabe, entsprechende elektrisch beheizte Reaktoren zur Durchführung chemischer Reaktionen zu verbessern.

### Offenbarung der Erfindung

Vor diesem Hintergrund schlägt die vorliegende Erfindung einen Reaktor und ein Verfahren zur Durchführung einer chemischen Reaktion gemäß den Oberbegriffen der unabhängigen Patentansprüche vor. Ausgestaltungen sind jeweils Gegenstand der abhängigen Patentansprüche sowie der nachfolgenden Beschreibung.

In dem zumeist teilweise elektrifizierten Ofenkonzept (der Begriff "Ofen" wird üblicherweise zur Bezeichnung eines entsprechenden Reaktors bzw. zumindest von dessen thermisch isoliertem Reaktionsraum verstanden), das der vorliegenden Erfindung zugrunde liegt, werden beispielsweise Reaktionsrohre bzw. entsprechende Rohrstrecken hiervon (nachfolgend auch kurz als "Rohre" bezeichnet) selbst als elektrische Widerstände benutzt, um Wärme zu erzeugen. Dieser Ansatz hat den Vorteil eines höheren Wirkungsgrads im Vergleich zu einer indirekten Erwärmung durch externe elektrische Heizkörper sowie einer höheren erreichbaren Wärmestromdichte. Es ist aber, wie eingangs erwähnt, auch möglich, im Rahmen der vorliegenden Erfindung irgendeine andere Art der elektrischen Beheizung (direkt oder indirekt, in Form einer Widerstands-, Impedanz- oder Induktionsheizung, mittels ein-oder mehrphasigem Wechselstrom oder mit Gleichstrom) durchzuführen, wenn sich diese als vorteilhaft herausstellt. Im Rahmen der Erfindung wird die Möglichkeit eingeschlossen, einen Teil der gesamten im Ofen aufgewandten Heizleistung auch über Verfeuerung chemischer Energieträger bereitzustellen.

Ist daher hier von einer elektrischen Beheizung die Rede, schließt dies das Vorhandensein einer zusätzlichen nichtelektrischen Beheizung nicht aus. Es kann insbesondere auch vorgesehen sein, die Beiträge der elektrischen und nichtelektrischen Beheizung über die Zeit zu variieren, beispielsweise in Abhängigkeit von Stromangebot und -preis bzw. Angebot und Preis nichtelektrischer Energieträger wie beispielsweise Erdgas.

Die Stromeinspeisung erfolgt im Falle der Beheizung mit mehrphasigem Wechselstrom in die direkt beheizten Reaktionsrohre über M separat angeschlossene Phasen. Die stromleitenden Reaktionsrohre, die mit den M Phasen verbunden sind, können an einen Sternpunkt ebenfalls elektrisch verbunden werden. Die Phasenzahl M beträgt insbesondere 3, entsprechend der Phasenzahl üblicher Drehstromquellen bzw. -netze. Grundsätzlich ist die vorliegende Erfindung aber nicht auf die Verwendung von drei Phasen beschränkt, sondern kann auch mit einer größeren Phasenzahl, beispielsweise einer Phasenzahl von 4, 5, 6, 7 oder 8, verwendet werden. Ein Phasenversatz beträgt dabei insbesondere 360°/M, d.h. bei einem dreiphasi gen Drehstrom 120°.

Durch die Sternschaltung am Sternpunkt wird in einer elektrischen Beheizung mit mehrphasigem Wechselstrom ein Potentialausgleich zwischen den Phasen erreicht, was eine elektrische Isolierung der angeschlossenen Rohrleitungen überflüssig macht. Dies stellt einen besonderen Vorteil eines derartigen Ofenkonzepts dar, da eine Unterbrechung der metallischen Reaktionsrohre zur Isolierung bestimmter Abschnitte insbesondere aufgrund der verwendeten hohen Temperaturen und des damit erforderlichen hohen Material- und Konstruktionsaufwands unerwünscht ist.

Die nachfolgend erläuterten, erfindungsgemäß vorgeschlagenen Maßnahmen eignen sich jedoch in gleicher Weise für die Verwendung von einphasigem Wechselstrom und Gleichstrom und die vorliegende Erfindung kann sowohl in wechselstrom- als auch in gleichstrombeheizten Reaktoren oder auch in entsprechenden Mischformen zum Einsatz kommen. Wie erwähnt, eignet sich die vorliegende Erfindung auch zum Einsatz bei indirekt beheizten Reaktionsrohren. Bei einer Gleichstromanordnung ist beispielsweise gegenüber einer Wechselstromanordnung lediglich die Art der Stromquelle und ein von der Stromeinspeisung entgegengesetzter Bereich der Reaktionsrohre oder entsprechender strombeaufschlagter Abschnitte unterschiedlich. In letzterem wird eine elektrische Verbindung unterschiedlicher Rohrstrecken nur optional durchgeführt. Da in einer Gleichstromanordnung kein potentialfreier Sternpunkt vorliegt, sind geeignete Stromabfuhrelemente bereitzustellen, die den Stromfluss wieder sicher nach außen führen. Letztere können analog zu den nachfolgend noch beschriebenen Stromeinspeisungen ausgeführt werden. Eine Anschlusskammer wie nachfolgend beschrieben kann im oberen Bereich vorhanden sein, jedoch ggf. auch entfallen, da die Beweglichkeitsanforderung wegfällt.

Im Sprachgebrauch der Patentansprüche betrifft die vorliegende Erfindung dabei einen Reaktor zur Durchführung einer chemischen Reaktion, der einen Reaktorbehälter (d.h. einen thermisch isolierten oder zumindest teilweise isolierten Bereich) und ein oder mehrere Reaktionsrohre aufweist, wobei in den Reaktorbehälter zur elektrischen Beheizung des oder der Reaktionsrohre Stromeinspeiseelemente geführt sind. Erfindungsgemäß weisen die Stromspeiseelemente jeweils einen stabförmigen Abschnitt auf, wobei die stabförmigen Abschnitte jeweils an einem Wanddurchtritt durch eine Wand des Reaktorbehälters verlaufen.

Im Rahmen der vorliegenden Erfindung ist außerhalb des Reaktorbehälters und anschließend an die Wand, durch welche die stabförmigen Abschnitte der des oder der Stromeinspeiseelemente verlaufen, also in welcher der oder die Wanddurchtritte ausgebildet ist oder sind, eine Anschlusskammer angeordnet, in die die stabförmigen Abschnitte ragen. Die Anschlusskammer kann, je nach Art der Stromeinspeisung, unterhalb oder seitlich des Reaktorbehälters angeordnet sein, so dass die Wand eine Boden- oder Seitenwand sein kann.

Die stabförmigen Abschnitte sind in der Anschlusskammer insbesondere an flexible Kontaktelemente angebunden, beispielsweise an Litzen, Strombänder, Lamellenbänder oder Stromfedern, beispielsweise auch über geeignete Zwischenabschnitte bzw. -elemente. Diese flexiblen Kontaktelemente sind mit einem nicht an die stabförmigen Abschnitte angebundenen Ende mit typischerweise unbeweglich in der Anschlusskammer, beispielsweise isoliert in einer Wand, angeordneten starren Kontaktelementen, die beispielsweise von einem Gleich- oder Wechselstrom-Transformator versorgt werden, befestigt. Die flexiblen Kontaktelemente gleichen insbesondere die Längsbewegung der stabförmigen Abschnitte in den Wanddurchtritten aus.

Erfindungsgemäß sind in der Anschlusskammer Kühlpaneele bereitgestellt, die mit einem Kühlfluid durchströmbar sind, und die zwischen zumindest zwei oder zwischen zumindest zwei Gruppen der stabförmigen Abschnitte, die in die Anschlusskammer ragen, angeordnet sind.

Die Erfindung wird nachfolgend weiter unter Bezugnahme auf Ausgestaltungen beschrieben, in denen eine Anzahl von Rohrstrecken des einen oder der mehreren Reaktionsrohre jeweils zwischen einem ersten Bereich und einem zweiten Bereich innerhalb des Reaktorbehälters und durch einen Zwischenbereich zwischen dem ersten und dem zweiten Bereich verlaufen, und wobei die Rohrstrecken in dem ersten Bereich zur elektrischen Beheizung der Rohrstrecken jeweils elektrisch mit einem oder mehreren Stromanschlüssen einer Stromquelle, und zwar im Fall einer Gleichstromanordnung mit einem oder mehreren Gleichstromanschlüssen und im Fall einer ein- oder mehrphasigen Wechselstromanordnung mit dem Phasenanschluss bzw. den Phasenanschlüssen ("Außenleitern") der Wechselstromquelle verbunden oder verbindbar sind, wie im Einzelnen unten erläutert. Bei einer alternativ ebenfalls möglichen indirekten Beheizung, die wie erwähnt ebenfalls einsetzbar ist, werden Anschlusselemente für entsprechende Heizeinrichtungen durch die Wand des Reaktorbehälters geführt.

Wie erwähnt, wird dabei in einer entsprechenden Ausgestaltung der Erfindung mittels einer mehrphasigen Wechselstromanordnung über die Phasenanschlüsse jeweils eine Wechselspannung bereitgestellt und die Wechselspannungen der Phasenanschlüsse sind in der oben erläuterten Weise phasenverschoben. Als mehrphasige Wechselstromquelle kann beispielsweise ein Versorgungsnetz oder ein geeigneter Generator und/oder Transformator dienen. Durch die Rohrstrecken wird in dieser Anordnung insbesondere eine Sternschaltung gebildet, in der diese an ihrem jeweils der Stromeinspeisung entgegengesetzten Ende, d.h. in dem zweiten Bereich, elektrisch leitend miteinander gekoppelt werden.

Im Fall einer Gleichstromanordnung werden dagegen in anderen Ausgestaltungen über einen oder mehrere Gleichstromanschlüsse dagegen gleiche oder unterschiedliche statische elektrische Potentiale eingespeist und es sind insbesondere an dem jeweils der Stromeinspeisung entgegengesetzten Ende Stromentnahmeelemente bereitgestellt. Entsprechendes gilt in vergleichbarer Weise bei der Verwendung eines einphasigen Wechselstroms aus einer oder mehreren Stromquellen.

In dem Zwischenbereich verlaufen die Rohrstrecken in der erwähnten Ausgestaltung der vorliegenden Erfindung insbesondere frei, d.h. ohne eine mechanische Abstützung, ohne elektrische Kontaktierung und/oder ohne fluidische oder rein mechanische Querverbindungen miteinander durch den Reaktorbehälter. Sie verlaufen in dieser Ausgestaltung in dem Zwischenbereich insbesondere im Wesentlichen oder vollständig gerade, wobei unter "im Wesentlichen gerade" verstanden werden soll, dass eine Winkelabweichung von weniger als 10°oder 5°vorlie gt.

Insbesondere die Spaltreaktionen beim Steamcracken sind stark endotherme Reaktionen. Für die Bereitstellung der nötigen Energie für die Reaktion mittels direkter Beheizung (Ohmscher Widerstand) werden daher hohe Stromstärken benötigt, die in dem angesprochenen Reaktorkonzept von einem oder mehreren außerhalb des Reaktors platzierten Transformatoren bereitgestellt werden.

Der elektrische Strom muss bei allen vorstehend genannten Konzepten der elektrischen Beheizung mit möglichst geringen Verlusten (geringer elektrischer Widerstand) von außen in das Innere des thermisch isolierten Reaktors und zu den prozessführenden Bereichen geleitet werden. In letzteren führt die endotherme Reaktion zusammen mit dem sehr schnell strömenden Prozessmedium auf der Rohrinnenseite (hoher Wärmeübergang) zu einer sehr effektiven Kühlung der Reaktorrohre, bzw. einer sehr hohen Wärmestromdichte an der Rohrinnenseite. Damit wird in den prozessführenden Rohren die gewünschte direkte Wärmeübertragung vom zumindest teilweise elektrisch beheizten Rohrmaterial zum Prozessgas erreicht.

Eine besondere Problemstellung betrifft die oben erwähnte verlustarme Zuführung des Starkstroms zu den prozessführenden Rohren. Diese Zuführung muss zwangsläufig, sofern eine Stromeinspeisung in die Rohre innerhalb des Reaktors erfolgen soll, über Leitungen erfolgen, die nicht durch einen direkten konvektiven Wärmeübergang an ein kühleres Prozessgas gekühlt werden können, wie auch nachfolgend noch erläutert. Dabei darf es nicht zu einer unzulässigen Temperaturüberhöhung in den weniger effizient gekühlten Bereichen kommen. Darüber hinaus muss über diese Zuführung auch ein steiler Temperaturanstieg von bis zu 900 K (max. Temperaturdifferenz zwischen Umgebung und Reaktor) innerhalb kurzer Weglängen (teilweise weniger als 1 Meter) überwunden werden.

Zur Reduzierung der thermischen Verluste und damit zum Erreichen eines hohen Systemwirkungsgrads ist es zwingend erforderlich, die elektrisch direkt beheizten Reaktionsrohre in einer isolierten Box (hier als Reaktorbehälter bezeichnet) zu platzieren. Beim Durchdringen der thermisch isolierten Wand des Reaktorbehälters muss der Stromleiter dabei eine quasi-adiabate Zone überwinden, ohne dass in diesen Bereichen unerlaubt hohe lokale Temperaturen auftreten.

Daher werden im Rahmen der soeben erläuterten besonders bevorzugten Ausgestaltung der vorliegenden Erfindung zur Erreichung dieses Ziels in dem ersten Bereich des Reaktors, also im Bereich der Stromeinspeisung, Stromeinspeiseanordnungen bereitgestellt, an die jeweils eine Rohrstrecke oder jeweils eine Gruppe der Rohrstrecken elektrisch angebunden ist. Die Rohrstrecken sind in einer solchen Anzahl vorgesehen, dass jeweils eine oder jeweils eine Gruppe von mehreren Rohrstrecken mit jeweils einer der Stromeinspeiseanordnungen verbindbar ist und umgekehrt. Die Anzahl der im Rahmen der vorliegenden Erfindung bereitgestellten Stromeinspeiseanordnungen richtet sich dabei nach der Anzahl der Phasenanschlüsse der mehrphasigen Wechselstromquelle im Falle einer Wechselstromanordnung bzw. entspricht diese Anzahl der Anzahl der Gleichstromanschlüsse. Sie kann bei Verwendung einer Wechselstromanordnung gleich der Anzahl von Phasenanschlüssen sein oder ein ganzzahliges Vielfaches hiervon betragen. In letzterem Fall können jeweils beispielsweise zwei der Stromeinspeiseanordnungen mit jeweils einem der Phasenanschlüsse der Wechselstromquelle verbunden sein usw.

Die Stromeinspeiseanordnungen umfassen dabei jeweils eine oder mehrere Kontaktpassagen, die sich an jeweils zumindest eine der Rohrstrecken in dem ersten Bereich anschließt oder anschließen, und die durch die Stromeinspeiseanordnungen verlaufen. Die eine oder die mehreren Kontaktpassagen in den Stromeinspeiseanordnungen kann oder können, wie unten noch genauer beschrieben, jeweils gerade oder in Form eines Umkehrbogens durch die Stromeinspeiseanordnungen verlaufen. Sie sind dann insbesondere als wandverstärkte Krümmer ausgebildet. Bei Reaktionsrohren ohne Umkehrbögen handelt es sich insbesondere um wandverstärkte Manschetten.

Die eine oder die mehreren Kontaktpassagen in den Stromeinspeiseanordnungen kann oder können entweder in einem oder mehreren Bauteilen, das oder die an die Rohrstrecken angefügt und mit den Rohrstrecken hochtemperaturfest stoffschlüssig verbunden ist oder sind, oder alternativ dazu in Form eines oder jeweils eines fortlaufenden Abschnitts der Reaktionsrohre ausgebildet sein. In sämtlichen Ausgestaltungen erweist sich typischerweise eine Ausbildung mit so wenigen Bauteilen wie möglich als vorteilhaft, wie auch unten noch erläutert.

In ersterem Fall können die Rohrstrecken, die zwischen dem ersten und dem zweiten Bereich in dem Reaktor verlaufen, an eine vorgefertigte Komponente, in dem eine oder mehrere der Kontaktpassagen verläuft oder verlaufen, angeschweißt sein, oder eine entsprechende weitere Komponente kann an die Rohrstrecken, die zwischen dem ersten und dem zweiten Bereich in dem Reaktor verlaufen, angegossen sein. Im letzteren Fall können fortlaufende Rohre, die einerseits die Rohrstrecken, die zwischen dem ersten und dem zweiten Bereich in dem Reaktor verlaufen, und anderseits die Kontaktpassagen in den jeweiligen Stromeinspeiseanordnungen bilden sollen, bereitgestellt werden, und weitere Komponenten der Stromeinspeiseanordnungen können durch ein An- oder Umgießen oder Anschweißen bereitgestellt werden.

Es versteht sich, dass, wenn zuvor und nachfolgend davon die Rede ist, dass die Stromeinspeiseanordnungen eine oder mehrere Kontaktpassagen umfassen, "die sich an jeweils zumindest eine der Rohrstrecken in dem ersten Bereich anschließt oder anschließen", dies bedeutet, dass die Kontaktpassagen in den Stromeinspeiseanordnungen mit den jeweiligen Rohrstrecken zwischen dem ersten und dem zweiten Bereich einen durchgängigen Kanal für das durch die Rohrstrecken zu führende Prozessfluid bilden.

Insbesondere setzt sich dabei ein Rohrinnenraum der jeweiligen Rohrstrecken zwischen dem ersten und dem zweiten Bereich in den entsprechenden Kontaktpassagen fort, insbesondere ohne eine nennenswerte Verjüngung oder Erweiterung, wobei eine "nennenswerte" Verjüngung oder Erweiterung eine Verjüngung oder Erweiterung um mehr als 10 % der Querschnittsfläche bezeichnen soll. Der Begriff "Kontaktpassagen" wird verwendet, um auszudrücken dass es sich um Bereiche handelt, in denen über metallische Bauteile eine leitende Verbindung zu einem Stromanschluss besteht, auch wenn es sich in bestimmten Ausgestaltungen der Erfindung bei den "Kontaktpassagen" um kontinuierliche Fortsetzungen der Rohrstrecken in dem ersten Bereich handelt.

Der Begriff "hochtemperaturfest stoffschlüssig verbunden" soll eine Verbindungsart bezeichnen, mittels derer zwei oder mehr metallische Teile miteinander stoffschlüssig verbunden sind und die Verbindung bei 500 °C bis 1. 500 °C, insbesondere 600 °C bis 1.200 °C oder 800 °C bis 1.000 °C dauerhaft ist, d. h. sich bei derartigen Temperaturen im regulären Betrieb nicht löst. Eine hochtemperaturfeste stoffschlüssige Verbindung kann insbesondere als Metall-Metall-Verbindung ausgebildet sein, die derart ausgeführt wird, dass kein nichtmetallischer Werkstoff zwischen den verbundenen Teilen verbleibt. Eine solche Verbindung kann insbesondere durch ein Verschweißen, Angießen oder Umgießen hergestellt werden. Es kann sich auch um eine Verbindung handeln, bei der am Übergang der verbundenen Teile kein Gefügeunterschied festzustellen ist und insbesondere um eine Verbindung, bei der kein zusätzliches Metall zur Verbindung verwendet wird.

In der soeben erläuterten Ausgestaltung der vorliegenden Erfindung sind die Wände der Kontaktpassagen der Stromeinspeiseanordnungen jeweils mit einem der Stromeinspeiseelemente verbunden, die jeweils, wie zuvor beschrieben, zumindest einen stabförmigen Abschnitt aufweisen, der jeweils an einem Wanddurchtritt durch eine Wand des Reaktorbehälters verläuft. Der stabförmige Abschnitt ist, beispielsweise im Gegensatz zu Litzen oder dergleichen, in allen Ausgestaltungen der vorliegenden Erfindung insbesondere einstückig (d.h. insbesondere nicht in Form paralleler oder verflochtener Drähte) ausgebildet. Er kann massiv oder zumindest teilweise rohrförmig, d.h. als Hohlstab, ausgebildet sein. Der stabförmige Abschnitt weist eine Längserstreckung senkrecht zu der Wand des Reaktorbehälters auf, die wenigstens doppelt so groß, insbesondere wenigstens dreifach, vierfach oder fünffach und beispielsweise bis zu zehnfach so groß ist wie eine größte Quererstreckung parallel zu der Wand des Reaktorbehälters. Der stabförmige Abschnitt kann im Querschnitt beispielsweise rund, oval oder drei- oder mehreckig ausgebildet sein oder eine beliebige andere Form aufweisen.

Die Stromeinspeiseelemente der Stromeinspeiseanordnungen können mit ihren stabförmigen Abschnitten jeweils direkt an die Wand der Kontaktpassagen angebracht sein oder durch eine einstückige Fertigung in diese übergehen. Es können aber auch ein oder mehrere Zwischenelemente vorgesehen sein, die dann jeweils einen Teil der Stromeinspeiseelemente bilden.

Die Kühlpaneele, die in der erfindungsgemäß vorgesehenen Anschlusskammer bereitgestellt sind, sind zumindest in einem Abschnitt flach ausgebildet, d.h. sie erstrecken sich zwischen zwei in einem Abstand zueinander angeordneten gedachten oder realen Grenzflächen, wobei der Abstand der Grenzflächen eine Dicke der Kühlpaneele definiert und eine Erstreckung entlang der Grenzflächen um mehr als das Doppelte, Fünffache, Zehnfache oder Zwanzigfache größer als die Dicke ist. Die Grenzflächen können ebene oder gekrümmte Grenzflächen sein, so dass die Kühlpaneele flach und eben ausgebildet sein können, sie können aber auch gekrümmt sein, so dass die Kühlpaneele in diesem Fall flach und halb- oder teilzylinderförmig gekrümmt ausgebildet sein können. Unterschiedliche Kühlpaneele können auch unterschiedlich dimensioniert bzw. ausgebildet sein. Die "Grenzflächen" sind dabei Flächen, die die maximale Dicke der Kühlpaneele definieren. Die Kühlpaneele müssen nicht vollflächig an diesen Grenzflächen anliegen.

Diese Dimensionierungen gelten für jedes der Kühlpaneele individuell, d.h. ein erstes Kühlpaneel kann schräg oder senkrecht zu einem zweiten Kühlpaneel angeordnet sein. Mehrere Kühlpaneele können insbesondere um eine Achse, die parallel zu der Längserstreckungsrichtung der stabförmigen Abschnitte der Stromeinspeiseelemente und senkrecht zu der Wand des Reaktorbehälters ist, zueinander verdreht sein.

Die Kühlpaneele können insbesondere für eine Durchströmung mit dem Kühlfluid in einer Richtung, die insgesamt einer Richtung senkrecht oder parallel zu den stabförmigen Abschnitten entspricht, eingerichtet sein, beispielsweise durch entsprechende Einspeise- und Entnahmeöffnungen für das Kühlfluid an Seiten, die parallel zu den stabförmigen Abschnitten liegen.

Die Dicke der Kühlpaneele kann, zumindest in dem wie erwähnt dimensionierten Abschnitt, im Bereich von 0,5 cm bis 10 cm, insbesondere von 1 cm bis 5 cm, liegen.

Insbesondere kann die Anschlusskammer Seitenwände aufweisen, die sich senkrecht zu der Wand des Reaktorbehälters, durch die die stabförmigen Abschnitte der Stromeinspeiseelemente jeweils an den Wanddurchtritten verlaufen, erstrecken. Ein oder mehrere weitere Kühlpaneele können dabei an bzw. parallel zu zumindest einer der Seitenwände angeordnet sein. Diese Kühlpaneele können mit einer grundsätzlichen Dimensionierung wie die zuvor erwähnten Kühlpaneele ausgebildet sein.

Insbesondere kann die Anschlusskammer auch eine Parallelwand aufweisen, die sich parallel zu der Wand des Reaktorbehälters, durch die die stabförmigen Abschnitte der Stromeinspeiseelemente jeweils an den Wanddurchtritten verlaufen, also beispielsweise der Boden- oder Seitenwand, erstreckt, wobei zwischen der angesprochenen Wand des Reaktorbehälters und der Parallelwand der Anschlusskammer die zuvor beschriebenen Elemente angeordnet sind. Die Parallelwand kann zumindest teilweise als Hohlwand ausgebildet und zur Durchströmung mit dem erwähnten oder einem weiteren Kühlfluid eingerichtet sein.

Besonders vorteilhaft ist im Zusammenhang der vorliegenden Erfindung, wenn eine Anschlusskammer ohne Einrichtungen zur Bereitstellung einer erzwungenen Konvektion in einer die Kühlpaneele umgebende Gasatmosphäre wie Gebläsen, Ventilatoren und dergleichen verwendet wird. Unter einer erzwungenen Konvektion wird hier, dem Verständnis in der Fachwelt entsprechend, eine durch äußere mechanische Einwirkung auf ein Fluid hervorgerufene Konvektion verstanden. Durch eine entsprechende mechanische Einwirkung entstehen Druckunterschiede, welche ein Fließen des Fluids bewirken.

Bei Verwendung einer damit im Gasraum überwiegend oder (bis auf natürliche Konvektion) radiativen Zwangskühlung der stabförmigen Abschnitte der Stromeinspeiseelemente besteht die Möglichkeit, den Kühlraum mit den Kühlpaneelen nach außen hin gasdicht, aber gegenüber dem Reaktorbehälter (insbesondere über die Wanddurchtritte) gasdurchlässig zu gestalten. Eine besonders bevorzugte Ausgestaltung der vorliegenden Erfindung umfasst daher dieses Merkmal. Damit kann das Innere des Reaktorbehälters inklusive des Kühlraums z.B. mit einer sauerstoffarmen Atmosphäre beaufschlagt werden, weil kein Gasaustausch, wie er bei einer Zwangskonvektion erforderlich wäre, notwendig ist.

Die Erfindung ermöglicht dabei eine bewegliche Aufnahme der stabförmigen Abschnitte der Stromeinspeiseelemente in der Wand des Reaktorbehälters, ohne dass eine gasdichte Abdichtung erforderlich ist, wie sie ansonsten zur Vermeidung eines Austritts von brennbaren Gasen in die Umgebung, beispielsweise bei Beschädigung der Reaktionsrohre ("Coilreißer") erforderlich wäre. Die Wanddurchtritte können daher im Rahmen der vorliegenden Erfindung deutlich kompakter und durch den Verzicht auf Dichtmaterialien dauerhaft ausgeführt werden. Vorteilhaft ist hierbei, dass alle aus dem Kühlraum zur Umgebung austretenden Bauteile nurmehr sehr geringe Ausgleichsbewegungen aufweisen, so dass die Umsetzung der Gasdichtigkeit hier gegenüber der Reaktorbehälterwand selbst deutlich vereinfacht ist.

In der vorliegenden Erfindung wird durch die beschriebene Kühlung zusätzlich zur entsprechenden Dimensionierung und Gestaltung der Stromeinspeiseelemente selbst insgesamt eine Einhaltung ausreichend niedriger Temperaturen insbesondere zur Anbindung hoch leitfähiger und/oder flexibler Kontaktelemente sichergestellt. Durch die im Rahmen der vorliegenden Erfindung vorgeschlagene aktive Kühlung außerhalb des wärmeisolierten Reaktorbehälters wird die Temperaturverteilung im äußeren (d.h. dem in die Anschlusskammer ragenden Teil) Teil der stabförmigen Abschnitte der Stromeinspeiseelemente beeinflusst. Die im Rahmen der vorliegenden Erfindung in der Anschlusskammer bereitgestellten Kühlpaneele, die auch als gekühlte Zwischenwände aufgefasst werden können, sorgen für eine erhöhte Wärmeabstrahlung von den stabförmigen Abschnitten.

Durch den Einsatz der vorliegenden Erfindung kann der Materialeinsatz bei der Gestaltung der Stromeinspeiseelemente bzw. der stabförmigen Abschnitte hiervon verkleinert werden. Bei rein passiver Kühlung dürften nur sehr niedrige Wärmeentwicklungsraten in den stabförmigen Abschnitten zugelassen werden, um ein Überhitzen bei dauerhafter Belastung zu vermeiden. Ein dazu erforderlicher erhöhter Materialeinsatz ist im Hinblick auf die Kosten und die mechanische Belastung des Systems unerwünscht.

Im Rahmen der vorliegenden Erfindung werden ausreichend niedrige Temperaturen in einem Anschlussbereich der stabförmigen Abschnitte erreicht, so dass z.B. sehr leitfähige, aber temperaturempfindliche Verbindungselemente mit Kupferanteilen angeschlossen werden können. Durch die Verwendung sehr leitfähiger Verbindungselemente werden die elektrischen Verluste in den Zuleitungen minimiert. Diese Verbindungselemente können außerdem bei ausreichend niedriger Temperatur flexibel ausgebildet werden, um auf diese Weise die thermische Dehnung der Abschnitte der Reaktionsrohre im Betrieb, die sich auf die stabförmigen Abschnitte der Stromeinspeiseelemente überträgt, aufzunehmen.

Eine besonders vorteilhafte Ausgestaltung der vorliegenden Erfindung umfasst daher, dass die stabförmigen Abschnitte der Stromeinspeiseelemente in der Anschlusskammer mit Kontaktelementen entsprechender Art, d.h. Kontaktelementen, die ein Material mit einer höheren Leitfähigkeit als das Material der stabförmigen Abschnitte aufweisen, ausgebildet sind. Alternativ oder zusätzlich können dies flexible Kontaktelemente wie Litzen, Strombänder, Lamellenbänder oder Stromfedern sein, wie erwähnt. Diese flexiblen Kontaktelemente sind mit einem nicht an die stabförmigen Abschnitte angebundenen Ende, wie erwähnt, in dieser Ausgestaltung mit unbeweglich in der Anschlusskammer angeordneten starren Kontaktelementen befestigt. Die starren Kontaktelemente können insbesondere in der erwähnten Parallelwand befestigt sein und/oder durch diese Parallelwand verlaufen.

Da der elektrische Leitwiderstand von vielen metallischen Werkstoffen mit zunehmender Temperatur steigt, können durch die aus der Zwangskühlung im Rahmen der vorliegenden Erfindung resultierende Absenkung der mittleren Temperatur in den stabförmigen Abschnitten der Stromeinspeiseelemente, aber auch in beispielsweise daran abgeschlossenen flexiblen Litzenelementen die thermische Verlustleistung reduziert und somit der Wirkungsgrad des Systems erhöht werden.

Als Kühlfluid wird im Rahmen der vorliegenden Erfindung aufgrund seiner sehr geringen elektrischen Leitfähigkeit vorteilhafterweise entmineralisiertes bzw. vollentsalztes Wasser, beispielsweise mit einer Leitfähigkeit von weniger als 10 µS/cm, insbesondere weniger als 5, 1, 0,5 oder 0,1 µS/cm bei 25 °C, verwendet. Auch die Platzierung der Kühlpaneele erfolgt insbesondere im Hinblick auf eine ausreichende Absicherung gegen Kurzschlüsse (insbesondere durch das Einhalten von Mindestabständen).

Gemäß einer besonders bevorzugten Ausgestaltung der vorliegenden Erfindung können die Kühlpaneele aus parallelen, miteinander durch Laser- oder Rollschweißen verbundenen und kissenartig aufgeblasenen Blechen gebildet sein.

Mit besonderem Vorteil weisen die in den Kühlraum ragenden stabförmigen Abschnitte dort zumindest an einer Stelle jeweils einen Querschnitt auf, der nicht weniger als 10 Quadratzentimeter, vorteilhafterweise nicht weniger als 30 Quadratzentimeter und insbesondere nicht weniger als 50 Quadratzentimeter beträgt. Durch die Verwendung entsprechend hoher Querschnitte kann eine besonders niedrige Bauteiltemperaturen sichergestellt werden.

Vorteilhafterweise sind die stabförmigen Abschnitte der Stromeinspeiseelemente, wie angesprochen, jeweils längsbeweglich in ihren Wanddurchtritten durch die Wand des Reaktorbehälters geführt. Eine auf diese Weise sichergestellte Bewegungsfreiheit ist besonders vorteilhaft für das mechanische Verhalten der Reaktionsrohre, das vor allem von der thermischen Dehnung der Rohre um mehrere Dezimeter im Betrieb des Reaktors dominiert wird. Durch die Bewegungsfreiheit wird die Biegebelastung auf die Reaktionsrohre, die bei einer starren Befestigung auftreten würde, reduziert. Die Reaktionsrohre können andererseits, wie auch unten noch angesprochen, im zweiten Bereich im Falle einer Wechselstrombeheizung mit einer starren Sternbrücke am Reaktordach befestigt werden, so dass auf diese Weise eine stabile Aufhängung auch bei einer entsprechenden Längsbeweglichkeit der stabförmigen Abschnitte der Stromeinspeiseelemente gegeben ist. Die stabförmigen Abschnitte der Stromeinspeiseelemente stellen aufgrund ihrer vorteilhaften Dimensionierung mit ausreichend hohem Leitungsquerschnitt eine sichere seitliche Führung der Reaktionsrohre sicher. Durch die Anbindung in dem Kühlraum, insbesondere über flexible Kontaktelemente, weisen dagegen, wie erwähnt, die aus dem Kühlraum zur Umgebung austretenden Bauteile nurmehr sehr geringe Ausgleichsbewegungen auf.

Da die in dem erfindungsgemäßen Reaktor durchgeführten Reaktionen hohe Temperaturen erfordern, muss die elektrische Verbindung in dem ersten Bereich in einem Hochtemperaturbereich von beispielsweise ca. 900 °C für das Steamcracken realisiert werden. Dies ist durch die erfindungsgemäß vorgeschlagenen Maßnahmen durch die Wahl geeigneter Materialien und deren ausreichende Dimensionierung möglich. Die Verbindung soll gleichzeitig eine hohe elektrische Leitfähigkeit und eine hohe mechanische Stabilität und Zuverlässigkeit bei hohen Temperaturen aufweisen. Ein Versagen der elektrischen Verbindung führt im Falle der Verwendung einer Wechselstrombeheizung und einer Sternpunktverbindung zu asymmetrischen Potentialen am Sternpunkt und in der Folge zur sofortigen sicherheitsbedingten Abschaltung der Anlage aufgrund einer unerwünschten Stromführung von Anlagenteilen. Die vorliegende Erfindung führt durch die Vermeidung derartiger Situationen zu Vorteilen gegenüber dem Stand der Technik.

Die erfindungsgemäß vorgesehene Kontaktierung der Rohrstrecken innerhalb des Reaktorbehälters gegenüber einer theoretisch ebenfalls möglichen Kontaktierung außerhalb des Reaktorbehälters, für die die Reaktionsrohre aus dem Reaktorbehälter geführt werden müssten, hat den Vorteil einer klarer definierten Strecke des elektrischen Wärmeeintrags, weil hierbei keine elektrisch beheizte Rohrabschnitte von dem wärmeren Innenraum zu dem kälteren Außenraum geführt werden müssen. Durch die erfindungsgemäße Kontaktierung sind aufgrund der vollständig innerhalb des Reaktorbehälters angeordneten Rohrstrecken räumlich sehr homogene äußere thermische Randbedingungen der elektrisch beheizten Rohrstrecken erzielbar. Hieraus ergeben sich prozesstechnische Vorteile, beispielsweise kann eine zu erwartende übermäßige lokale Koksbildung in beheizten und nach außen thermisch isolierten Durchtritten vermieden werden.

Im Rahmen der vorliegenden Erfindung können die Stromeinspeiseelemente, die Kontaktpassagen und die Rohrstrecken aus dem gleichen Material oder aus Materialien gebildet sein, deren elektrische Leitfähigkeiten (im Sinne einer Materialkonstante, wie in der Fachwelt üblich) sich um nicht mehr als 50%, nicht mehr als 30%, nicht mehr als 10% voneinander unterscheiden oder vorteilhafterweise gleich sind. Beispielsweise können die genannten Komponenten auch aus Stählen derselben Stahlklasse ausgebildet sein. Die Verwendung gleicher oder nahe verwandter Materialien kann dabei das Angießen oder Verschweißen erleichtern. Die in dem Kühlraum angebundenen Kontaktelemente können dagegen aus anderem Material gebildet sein, das weniger temperaturfest ausgebildet sein kann.

In einer bevorzugten Ausführungsform weisen die Stromeinspeiseelemente, die Kontaktpassagen und die Rohrstrecken eine hitzebeständige Chrom-Nickel-Stahllegierung mit hoher Oxidations- bzw. Zunderbeständigkeit und hoher Aufkohlungsbeständigkeit auf, oder sind aus einer solchen gebildet.

Beispielsweise kann es sich um ein eisenhaltiges Material mit 0,1 bis 0,5 Gew.-% Kohlenstoff, 20 bis 50 Gew.-% Chrom, 20 bis 80 Gew.-% Nickel, 0 bis 2 Gew.-% Niob, 0 bis 3 Gew.-% Silicium, 0 bis 5 % Wolfram und 0 bis 1 Gew.-% anderer Komponenten handeln, wobei die Gehalte sich jeweils zu dem Nichteisenanteil ergänzen.

Beispielsweise können Materialien mit den Normbezeichnungen GX40CrNiSi25-20, GX40NiCrSiNb35-25, GX45NiCrSiNbTi35-25, GX35CrNiSiNb24-24, GX45NiCrSi35-25, GX43NiCrWSi35-25-4, GX10NiCrNb32-20, GX50CrNiSi30-30, G-NiCr28W, G-NiCrCoW, GX45NiCrSiNb45-35, GX13NiCrNb45-35, GX13NiCrNb37-25, oder GX55NiCrWZr33-30-04 gemäß DIN EN 10027, Teil 1, "Werkstoffe", verwendet werden. Diese haben sich für den Hochtemperatureinsatz als besonders geeignet erwiesen.

In sämtlichen zuvor erläuterten Fällen können das Verbindungselement und die Rohrstrecken aus demselben Material oder aus Materialien ausgebildet sein, deren elektrische Leitfähigkeiten (im Sinne einer Materialkonstante, wie in der Fachwelt üblich) sich um nicht mehr als 50%, nicht mehr als 30%, nicht mehr als 10% voneinander unterscheiden oder vorteilhafterweise gleich sind. Beispielsweise können das Verbindungselement und die Rohrstrecken auch aus Stählen derselben Stahlklasse ausgebildet sein. Die Verwendung gleicher oder nahe verwandter Materialien kann dabei die einstückige Ausbildung des Verbindungselements und der Rohrstrecken, beispielsweise durch Angießen oder Verschweißen, erleichtern.

In dem zweiten Bereich können sämtliche Rohrstrecken innerhalb des Reaktorbehälters bei Beheizung mittels Wechselstrom mittels eines starren Verbindungselements ("Sternbrücke") elektrisch leitend miteinander verbunden sein, oder diese Verbindung kann gruppenweise mittels mehrerer starrer Verbindungselemente erfolgen.

Die elektrisch leitende Verbindung wird dabei, d.h. bei Beheizung mittels Wechselstrom, derart vorgenommen, dass sich ein zumindest weitgehender Potentialausgleich der im ersten Bereich wie erläutert angeschlossenen Phasen ergibt. Das eine oder die mehreren Verbindungselemente koppelt bzw. koppeln die verbundenen Rohrstrecken insbesondre fluidsammelnd und nicht fluidverteilend, im Gegensatz zu einem aus dem Stand der Technik bekannten, außerhalb des Reaktors angeordneten Sammler. Der in der soeben erläuterten Ausgestaltung der Erfindung vorgeschlagene Potentialausgleich innerhalb des Reaktorbehälters hat den Vorteil, einer nahezu vollständige Potentialfreiheit bzw. einer deutlich reduzierten Stromrückführung über einen Neutralleiter. Eine minimale Stromabfuhr über die Headeranschlüsse hin zu anderen Teilen der Prozessanlage und eine weitgehende Berührsicherheit ist die Folge. Auch in diesem Zusammenhang ergibt sich der Vorteil der räumlich sehr homogenen äußeren thermischen Randbedingungen im Gegensatz zu einer für einen Potentialausgleich außerhalb des Reaktorbehälters erforderlichen Führung der Reaktionsrohre durch die Wand des Reaktorbehälters die bereits oben erläuterten prozesstechnische Vorteile.

Durch eine entsprechende Realisierung einer Sternschaltung in Kombination mit der erläuterten Stromeinspeisung über längsgeführte Stromeinspeiseelemente wird insgesamt eine Konstruktion geschaffen, die eine effiziente Bestromung bei gleichzeitiger stabiler Befestigung, die den vor allem aus den hohen Wärmedehnungsraten resultierenden Spannungen standhält, ermöglicht.

Die vorliegende Erfindung wird nachfolgend zunächst unter Bezugnahme auf Reaktionsrohre und Reaktoren beschrieben, wie sie zum Steamcracken zum Einsatz kommen. Wie danach erläutert, kann die Erfindung aber auch in anderen Reaktortypen zum Einsatz kommen, wie sie danach angesprochen werden. Generell kann, wie erwähnt, der erfindungsgemäß vorgeschlagene Reaktor zur Durchführung aller endothermen chemischen Reaktionen verwendet werden.

Reaktionsrohre, wie sie typischerweise zum Steamcracken verwendet werden, weisen typischerweise wenigstens einen Umkehrbogen auf. Beispielsweise kann es sich hierbei um sogenannte 2-Passagen-Coils handeln. Diese weisen zwei Rohrstrecken im Reaktorbehälter auf, die über (genau) einen Umkehrbogen ineinander übergehen und daher grundsätzlich die Form eines (verlängerten) U aufweisen. Die in den Reaktorbehälter ein- und aus diesem austretenden Abschnitte, die insbesondere nahtlos oder ohne strömungstechnisch relevanten Übergang in die beheizten Rohrstrecken übergehen, werden hier (auch in Bezug auf die nachfolgend beschriebenen Reaktionsrohre) als "Einspeiseabschnitt" und "Entnahmeabschnitt" bezeichnet. Es sind stets mehrere solcher Reaktionsrohre vorhanden.

Der Reaktor kann also in dieser Ausgestaltung derart ausgebildet sein, dass die Rohrstrecken jeweils zwei Rohrstrecken mehrerer Reaktionsrohre umfassen, die zumindest zum Teil nebeneinander in dem Reaktorbehälter angeordnet sind, wobei die jeweils zwei Rohrstrecken der mehreren Reaktionsrohre in dem ersten Bereich über jeweils einen Umkehrbogen ineinander übergehen. Insbesondere ist, wie erwähnt, eine der jeweils zwei Rohrstrecken in dem zweiten Bereich mit einem Einspeiseabschnitt und die anderen der jeweils zwei Rohrstrecken in dem zweiten Bereich mit einem Entnahmeabschnitt verbunden.

Die eine oder die mehreren Kontaktpassagen in den Stromeinspeiseanordnungen können in diesem Fall die Umkehrbögen umfassen oder darstellen. Da mehrere Reaktionsrohre mit Umkehrbögen vorhanden sind, können bei entsprechender Anzahl auch jeweils mehrere Umkehrbögen in den jeweiligen Stromeinspeiseanordnungen bereitgestellt sein und auf diese Weise an einen Stromanschluss angeschlossen sein. Auf diese Weise kann die mechanische Befestigung verbessert und die Bauteilzahl reduziert werden. Es ist alternativ dazu aber auch möglich, und zwar auch bei Bestromung mehrerer Umkehrbögen über einen Stromanschluss, jeweils eine Stromeinspeiseanordnung pro Umkehrbogen bereitzustellen, beispielsweise um eine individuelle Längsbeweglichkeit der Stromeinspeiseelemente bei ggf. unterschiedlicher thermischer Ausdehnung sicherzustellen.

Die soeben erläuterte Ausgestaltung der Erfindung kann auch auf Fälle übertragen werden, in denen Reaktionsrohre verwendet werden, die zwei Einspeiseabschnitte und einen Entnahmeabschnitt aufweisen. Bei solchen Reaktionsrohren sind die zwei Einspeiseabschnitte jeweils mit einem Rohrabschnitt verbunden. Der Entnahmeabschnitt ist ebenfalls mit einem Rohrabschnitt verbunden. Die mit den Einspeiseabschnitten verbundenen Rohrabschnitte gehen in einem typischerweise Y-förmigen Verbindungsbereich in den mit dem Entnahmeabschnitt verbundenen Rohrabschnitt über. Sowohl die mit den Einspeiseabschnitten verbundenen Rohrabschnitte als auch der mit dem Entnahmeabschnitt verbundene Rohrabschnitt können jeweils keinen, einen oder mehrere Umkehrbögen aufweisen.

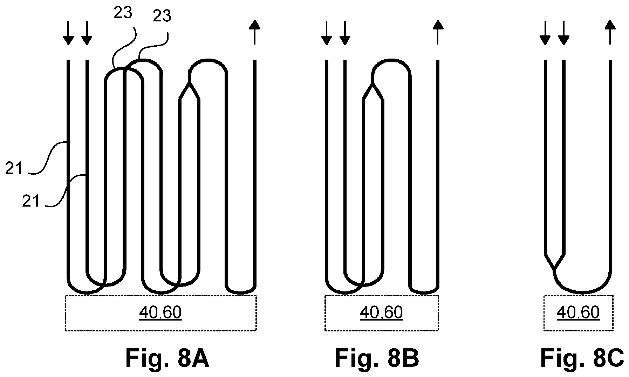

Beispielsweise können Reaktionsrohre verwendet werden, wie sie in Figur 8C veranschaulicht sind. Bei diesen weisen die mit den Einspeiseabschnitten verbundenen Rohrabschnitte keinen Umkehrbogen auf, wohingegen der mit dem Entnahmeabschnitt verbundene Rohrabschnitt einen Umkehrbogen aufweist.

Es können jedoch auch Reaktionsrohre verwendet werden, wie sie in Figur 8B veranschaulicht sind. Bei diesen weisen die mit den Einspeiseabschnitten verbundenen Rohrabschnitte jeweils einen Umkehrbogen auf und der mit dem Entnahmeabschnitt verbundene Rohrabschnitt weist zwei Umkehrbögen auf.

Auch die Verwendung von Reaktionsrohren, wie sie in Figur 8A veranschaulicht sind. ist möglich. Bei diesen weisen die mit den Einspeiseabschnitten verbundenen Rohrabschnitte jeweils drei Umkehrbögen auf und der mit dem Entnahmeabschnitt verbundene Rohrabschnitt weist zwei Umkehrbögen auf.

Neben der zuvor unter Bezugnahme auf 2-Passagen-Coils beschriebenen Ausgestaltung kann aber auch eine Ausgestaltung zum Einsatz kommen, die sich zur Verwendung mit sogenannten 4-Passagen-Coils eignet. Diese weisen vier im Wesentlichen gerade verlaufende Rohrstrecken auf. Auch Anordnungen mit einer höheren, geraden Anzahl an gerade verlaufenden Rohrstrecken ist jedoch möglich.

Ein entsprechend ausgebildeter Reaktor weist dabei allgemeiner betrachtet ein oder mehrere Reaktionsrohre auf, das oder die jeweils eine gerade Anzahl von vier oder mehr seriell miteinander über eine Anzahl von Umkehrbögen verbundenen Rohrstrecken aufweist oder aufweisen, wobei die Anzahl der Umkehrbögen um eins geringer ist als die Anzahl der seriell miteinander über die Umkehrbögen verbundenen Rohrstrecken, und wobei die Umkehrbögen, anfangend mit einem ersten Umkehrbogen in dem ersten Bereich, abwechselnd in dem ersten und dem zweiten Bereich angeordnet sind.

Unter einem "Umkehrbogen" wird hier insbesondere ein Rohrabschnitt oder Rohrbauteil verstanden, der oder das einen teilkreis- oder teilelliptischen, insbesondere halbkreis- oder halbelliptischen Rohrbogen umfasst. Beginn und Ende weisen insbesondere in einer Ebene nebeneinander liegende Schnittflächen auf.

Jeder der Umkehrbögen, sofern er in dem ersten Bereich innerhalb des Reaktorbehälters liegt und entsprechend bestromt werden soll, kann in Form einer Kontaktpassage in einer erfindungsgemäßen Stromeinspeiseanordnung ausgebildet sein oder einen Teil einer solchen darstellen. Entsprechend ragen die damit verbundenen Stromeinspeiseelemente in die Anschlusskammer.

Wie erwähnt, kann ein entsprechender Reaktor insbesondere als Reaktor zum Steamcracken ausgebildet sein, und zwar insbesondere durch die Wahl entsprechen temperaturfester Materialien und die geometrische Ausgestaltung der Reaktionsrohre.

Reaktionsrohre, wie sie typischerweise zur Dampfreformierung verwendet werden, weisen typischerweise keine Umkehrbögen innerhalb des Reaktorbehälters auf. In diesem Fall umfassen die Rohrstrecken aber jeweils eine Rohrstrecke von mehreren Reaktionsrohren, wobei die Rohrstrecken innerhalb des Reaktorbehälters fluidisch unverbunden und zumindest zum Teil nebeneinander angeordnet sind und jeweils mit einem Einspeiseabschnitt für Fluid in dem ersten Bereich und einem Entnahmeabschnitt für Fluid in dem zweiten Bereich verbunden sind. Die Einspeise- und Entnahmeabschnitte für Fluid erstrecken sich insbesondere in derselben Richtung wie die Rohrstrecken bzw. bewirken keine um mehr als 15°gegenüber der Fluidströmung in den damit verbundenen Rohrstrecken abgelenkte Fluidströmung. Die Einspeiseabschnitte und Entnahmeabschnitte sind insbesondere ebenfalls einstückig, d.h. insbesondere in Form desselben Rohrs, mit diesen ausgebildet. Die Reaktionsrohre können zur Dampfreformierung insbesondere auch mit einem geeigneten Katalysator ausgestattet werden.

In dieser Ausgestaltung stellen die Kontaktpassagen in einer erfindungsgemäßen Stromeinspeiseanordnung gerade Rohrabschnitte bzw. Kanäle dar. Das Stromeinspeiseelement kann dabei in dem zweiten Bereich insbesondere manschettenartig an die Reaktionsrohre angefügt sein.

In allen Fällen kann durch die Ausbildung der Stromeinspeiseelemente und der Kontaktpassagen sowie optional auch der Rohrstrecken aus so wenigen Einzelteilen wie möglich die Anzahl der Metall-Metall-Verbindungen (z.B. Schweiß- oder Lötverbindungen) reduziert oder sogar komplett auf diese verzichtet werden. Dadurch können die mechanische Stabilität sowie die Zuverlässigkeit erhöht werden. In einer besonders vorteilhaften Ausführung können die Stromeinspeiseelemente und die Kontaktpassagen jeweils als ein einziges Gussteil umgesetzt werden, oder es können, wie erwähnt, Teile der prozessführenden Rohrleitungen umgossen werden und/oder Teile der prozessführenden Rohrleitungen können als ein integraler Bestandteil eines entsprechenden Gussstücks ausgebildet sein.

Metall-Metall-Verbindungen oder Metallübergänge, die im Rahmen der vorliegenden Erfindung reduziert werden können, könnten zu einer lokalen elektrischen Widerstandsänderung, und deswegen zu Hot Spots führen. Hot Spots wiederum führen zu einer Reduzierung der Lebenszeit durch erhöhte lokale Temperaturen oder zu mechanischen Spannungsspitzen durch hohe lokale Temperaturgradienten. Dies wird im Rahmen der vorliegenden Erfindung vermieden.

Eine einteilige Ausbildung so vieler Komponenten wie möglich bringt mechanische Stabilität, Zuverlässigkeit und eine Reduktion der Einzelbauteile. Eine hohe mechanische Stabilität ist erstrebenswert, da ein Versagen wie erwähnt zu sicherheitskritischen Situationen führen kann. Durch die beschriebene Ausführung im Sinne der vorliegenden Erfindung kann das Prinzip der mit mehrphasigem Wechselstrom widerstandbeheizten Reaktionsrohre in Sternschaltung technisch im Hochtemperaturbereich, d.h. insbesondere bei mehr als 500 °C, mehr als 600 °C, mehr als 700 °C oder mehr als 800 °C, realisiert werden.

Die Erfindung betrifft auch ein Verfahren zur Durchführung einer chemischen Reaktion unter Verwendung eines Reaktors, der einen Reaktorbehälter und ein oder mehrere Reaktionsrohre aufweist, wobei in den Reaktorbehälter zur elektrischen Beheizung des einen oder der mehreren Reaktionsrohre Stromeinspeiseelemente geführt sind.

Erfindungsgemäß wird ein Reaktor verwendet, bei dem die Stromeinspeiseelemente jeweils einen stabförmigen Abschnitt aufweisen und die stabförmigen Abschnitte an jeweils einem Wanddurchtritt durch eine Wand des Reaktorbehälters verlaufen. Außerhalb des Reaktorbehälters und anschließend an die Wand des Reaktorbehälters, durch die die stabförmigen Abschnitte an ihren Wanddurchtritten verlaufen, ist eine Anschlusskammer angeordnet, in die die stabförmigen Abschnitte hineinragen. In der Anschlusskammer sind Kühlelemente bereitgestellt, die mit einem Kühlfluid durchströmbar sind, und die zwischen zumindest zwei oder zwischen zumindest zwei Gruppen der stabförmigen Abschnitte, die in die Anschlusskammer hineinragen, angeordnet sind.

In einer besonders bevorzugten Ausgestaltung der Erfindung wird ein Reaktor verwendet, bei dem eine Anzahl von Rohrstrecken des einen oder der mehreren Reaktionsrohre jeweils zwischen einem ersten Bereich und einem zweiten Bereich in dem Reaktorbehälter verlaufen, und wobei die ersten Bereiche zur Beheizung der Rohrstrecken jeweils elektrisch mit einem oder mehreren Stromanschlüssen einer Stromquelle verbunden werden.

In dieser Ausgestaltung wird dabei ein Reaktor verwendet, der in dem ersten Bereich Stromeinspeiseanordnungen aufweist, an die jeweils eine oder jeweils eine Gruppe der Rohrstrecken elektrisch angebunden ist, und die jeweils eines der Stromeinspeiseelemente mit dem oder den stabförmigen Abschnitten aufweisen, die jeweils an Wanddurchtritten durch eine Wand des Reaktorbehälters verlaufen. Außerhalb des Reaktorbehälters und anschließend an die Wand des Reaktorbehälters, durch die die stabförmigen Abschnitte an ihren Wanddurchtritten verlaufen, ist eine Anschlusskammer angeordnet, in die die stabförmigen Abschnitte hineinragen. In der Anschlusskammer sind Kühlpaneele bereitgestellt, die mit einem Kühlfluid durchströmbar sind, und die zwischen zumindest zwei oder zwischen zumindest zwei Gruppen der stabförmigen Abschnitte, die in die Anschlusskammer hineinragen, angeordnet sind.

Zu weiteren Merkmalen und Vorteilen eines entsprechenden Verfahrens, bei dem vorteilhafterweise ein Reaktor gemäß einer der zuvor erläuterten Ausgestaltungen der Erfindung verwendet wird, sei auf die obigen Erläuterungen verwiesen.

Die Erfindung wird nachfolgend unter Bezugnahme auf die beigefügten Zeichnungen weiter erläutert, die Ausgestaltungen der vorliegenden Erfindung unter Bezugnahme und im Vergleich zum Stand der Technik veranschaulichen.

### Figurenbeschreibung

Figur 1 veranschaulicht schematisch einen Reaktor zur Durchführung einer chemischen Reaktion gemäß einer nicht erfindungsgemäßen Ausgestaltung.
Figur 2 veranschaulicht schematisch einen Reaktor zur Durchführung einer chemischen Reaktion gemäß einer Ausgestaltung der Erfindung.
Figur 3 veranschaulicht schematisch einen Reaktor zur Durchführung einer chemischen Reaktion gemäß einer weiteren Ausgestaltung der Erfindung.
Figur 4 veranschaulicht schematisch einen Reaktor mit einer Stromeinspeiseanordnung gemäß einer Ausgestaltung der Erfindung.
Figuren 5A und 5B zeigen Teilansichten von Reaktoren mit Anschlusskammern gemäß Ausgestaltungen der vorliegenden Erfindung im Längs- und Querschnitt.
Figuren 6A bis 6C veranschaulichen Reaktionsrohre und entsprechende Anordnungen zur Verwendung in einem Reaktor gemäß einer Ausgestaltung der Erfindung.
Figuren 7A und 7B veranschaulichen Reaktionsrohre und entsprechende Anordnungen zur Verwendung in einem Reaktor gemäß einer Ausgestaltung der Erfindung.
Figuren 8A bis 8C veranschaulichen weitere Reaktionsrohre zur Verwendung in einem Reaktor gemäß einer Ausgestaltung der Erfindung.
Figur 9 veranschaulicht schematisch einen Reaktor mit einer Stromeinspeiseanordnung gemäß einer Ausgestaltung der Erfindung.

In den Figuren sind einander baulich oder funktionell entsprechende Elemente mit identischen Bezugszeichen veranschaulicht und werden der Übersichtlichkeit halber nicht wiederholt erläutert. Werden nachfolgend Komponenten von Vorrichtungen erläutert, betreffen die entsprechenden Erläuterungen jeweils auch die damit durchgeführten Verfahren und umgekehrt. Die Figurenbeschreibung nimmt dabei wiederholt auf eine Wechselstrombeheizung Bezug. Wie erwähnt, eignet sich die vorliegende Erfindung aber in gleicher Weise auch zur Verwendung von Gleichstrom zur Beheizung. Auf die obigen Erläuterungen wird dabei verwiesen.

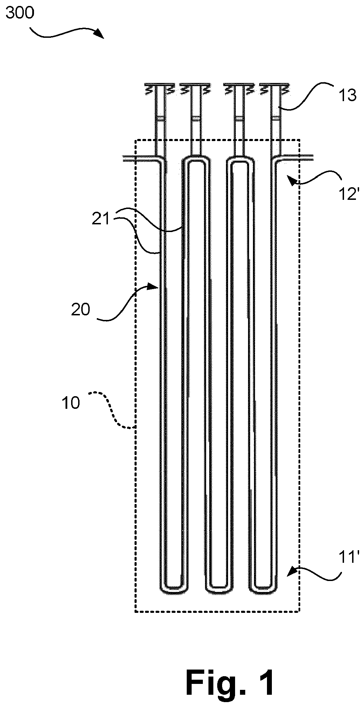

Figur 1 veranschaulicht schematisch einen Reaktor zur Durchführung einer chemischen Reaktion gemäß einer nicht erfindungsgemäßen Ausgestaltung.

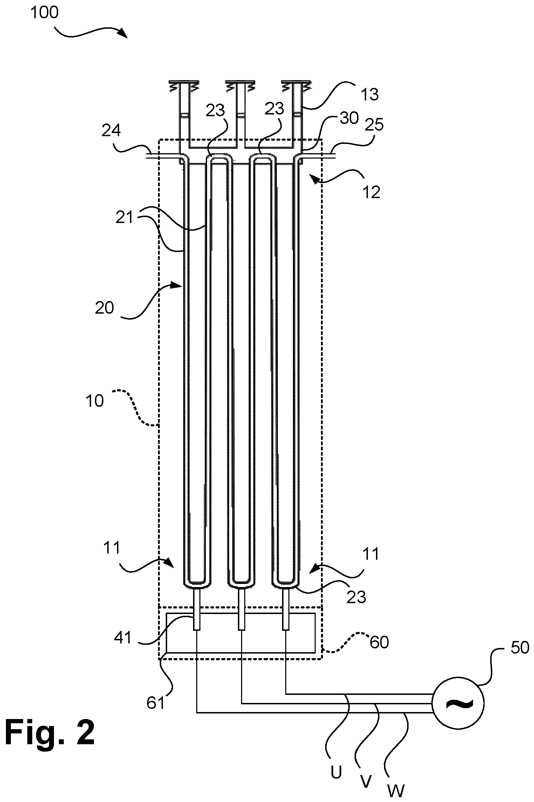

Der hier mit 300 bezeichnete Reaktor ist zur Durchführung einer chemischen Reaktion eingerichtet. Er weist dazu einen insbesondere thermisch isolierten Reaktorbehälter 10 und ein Reaktionsrohr 20 auf, wobei eine Anzahl von Rohrstrecken des Reaktionsrohrs 20, die hier nur in zwei Fällen mit 21 bezeichnet sind, jeweils zwischen einer ersten Zone 11' und einer zweiten Zone 12' in dem Reaktorbehälter 10 verlaufen. An einer Decke des Reaktorbehälters bzw. an einer Stützstruktur ist das Reaktionsrohr 20, das nachfolgend noch in Bezug auf Figur 2 näher erläutert wird, mit geeigneten Aufhängungen 13 befestigt. In einem unteren Bereich kann der Reaktorbehälter insbesondere eine nicht veranschaulichte Feuerung aufweisen. Es versteht sich, dass hier und nachfolgend jeweils mehrere Reaktionsrohre bereitgestellt sein können.

Figur 2 veranschaulicht schematisch einen Reaktor zur Durchführung einer chemischen Reaktion gemäß Ausgestaltung der vorliegenden Erfindung, der insgesamt mit 100 bezeichnet ist.

Die zuvor mit 11' und 12' bezeichneten Zonen sind hier als Bereiche 11 und 12 ausgebildet, wobei die Rohrstrecken 21 zur Beheizung der Rohrstrecken 21 in den ersten Bereichen 11 jeweils elektrisch mit den Phasenanschlüssen U, V, W) einer mehrphasigen Wechselstromquelle 50 verbindbar sind. Schalter und dergleichen sowie die spezifische Art der Anbindung sind nicht veranschaulicht.

Die Rohrstrecken 21 sind in der hier veranschaulichten Ausgestaltung der Erfindung in den zweiten Bereichen 12 mittels eines Verbindungselements 30, das einstückig mit dem einen oder den mehreren Reaktionsrohren 20 verbunden und innerhalb des Reaktorbehälters 10 angeordnet ist, elektrisch leitend miteinander verbunden. Daran kann auch ein Neutralleiter angebunden sein.

In dem hier veranschaulichten Reaktor 100 sind damit mehrere Rohrstrecken 21 eines Reaktionsrohrs 20 (wenngleich mehrere solcher Reaktionsrohre 20 bereitgestellt sein können), die nebeneinander in dem Reaktorbehälter 10 angeordnet sind. Die Rohrstrecken 21 gehen über Umkehrbögen 23 (nur teilweise bezeichnet) ineinander über und sind mit einem Einspeiseabschnitt 24 und einem Entnahmeabschnitt 25 verbunden.

Eine erste Gruppe der Umkehrbögen 23 (in der Zeichnung unten) ist nebeneinander in dem ersten Bereich 11 und eine zweite Gruppe der Umkehrbögen 23 (in der Zeichnung oben) ist nebeneinander in dem zweiten Bereich 12 angeordnet. Die Umkehrbögen 23 der zweiten Gruppe sind in dem Verbindungselement 30 ausgebildet und die Rohrstrecken 21 erstrecken sich ausgehend von dem Verbindungselement 30 in dem zweiten Bereich 12 zu dem ersten Bereich 11.

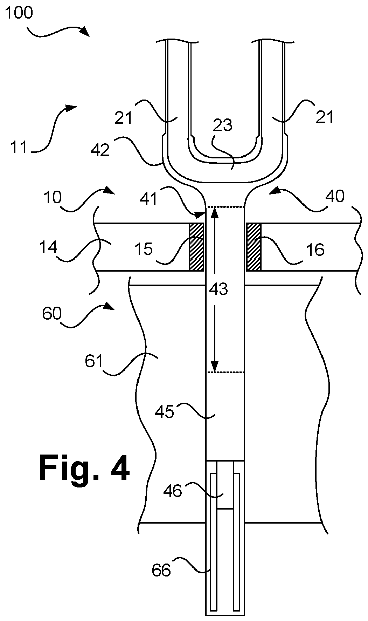

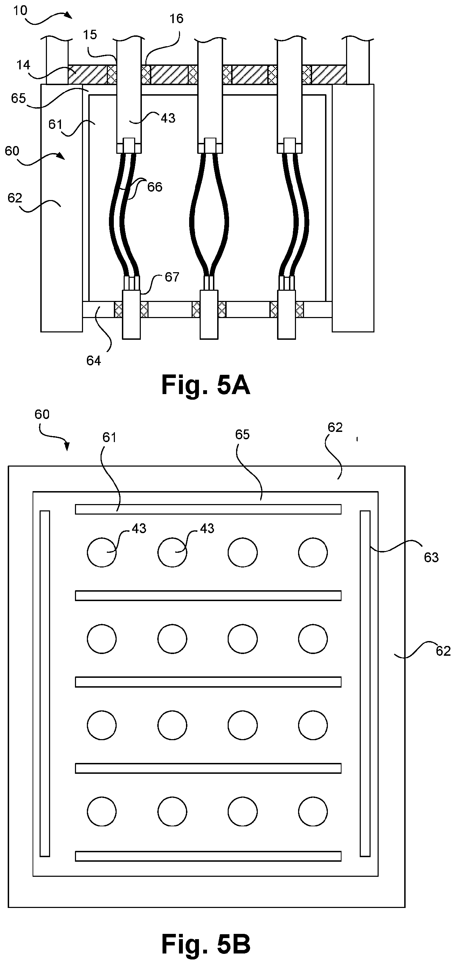

Die Verwendung des Verbindungselements 30 ist im Rahmen der vorliegenden Erfindung optional, wenngleich vorteilhaft. Ausgestaltungen der Erfindung, die nachfolgend erläutert sind, betreffen dagegen insbesondere die Ausgestaltung der Mittel zur Stromeinspeisung in dem ersten Bereich 11. Diese erfolgt durch die Verwendung von Stromeinspeiseelementen 41, die hier stark vereinfacht veranschaulicht sind und von denen nur eines bezeichnet ist. Diese sind Teil von Stromeinspeiseanordnungen, wie sie insbesondere in Bezug auf Figur 4 erläutert werden, und ragen in einen Kühlraum 60 mit Kühlpaneelen 61, der insbesondere in Bezug auf Figuren 5A und 5B näher erläutert wird.

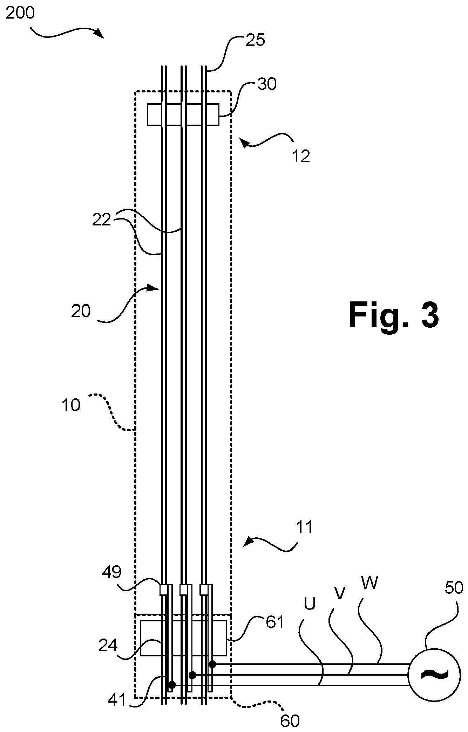

Figur 3 veranschaulicht schematisch einen Reaktor zur Durchführung einer chemischen Reaktion gemäß Ausgestaltung der vorliegenden Erfindung, der insgesamt mit 200 bezeichnet ist.

In dem Reaktor 200 umfassen die hier abweichend mit 22 bezeichneten Rohrstrecken jeweils eine Rohrstrecke 22 von mehreren Reaktionsrohren 20, wobei die Rohrstrecken fluidisch 22 unverbunden nebeneinander in dem Reaktorbehälter 10 angeordnet sind und jeweils mit Einspeiseabschnitten 24 und Entnahmeabschnitten 25 verbunden sind. Zu den übrigen Elementen sei auf die obigen Erläuterungen zu den voranstehenden Figuren ausdrücklich verwiesen.

Wiederum ist die Verwendung eines Verbindungselements 30 im Rahmen der vorliegenden Erfindung optional, wenngleich vorteilhaft. Auch hier sind Stromeinspeiseelemente 41, die Anschlusskammer 60 und ein Kühlpaneel 61 stark vereinfacht veranschaulicht. Die Stromeinspeiseelemente können einen manschettenartigen Bereich 49 aufweisen, der in dem ersten Bereich 11 um die Reaktionsrohre 20 bzw. die Rohrstrecken gelegt sind.

Figur 4 zeigt eine Ausschnittsdarstellung des ersten Bereichs 11 eines Reaktors 100, beispielsweise gemäß Figur 2, mit einer in dem ersten Bereich 11 angeordneten Stromeinspeiseanordnung 40 und einem daran angebundenen Reaktionsrohr 20, dessen hier abschnittsweise veranschaulichten Rohrstrecken 21 hier über einen Umkehrbogen 23 ineinander übergehen.

Der Umkehrbogen 23 ist hier in einer Kontaktpassage 42 mit einer verstärkten Wandung ausgebildet, die sich an die zwei Rohrstrecken 21 in dem ersten Bereich 11 anschließt. Eine Wand der Kontaktpassage 42, und damit des Umkehrbogens 23, ist mit dem bereits erwähnten, insgesamt mit 41 bezeichneten Stromeinspeiseelement verbunden, das, wie hier zwischen gestrichelten Linien angedeutet, einen stabförmigen Abschnitt 43 aufweist, der jeweils an einem Wanddurchtritt 15 durch eine Wand 14 des Reaktorbehälters 10 verläuft. Der Wanddurchtritt 15 ist hier übertrieben breit dargestellt. Der stabförmige Abschnitt ist in dem Wanddurchtritt 15 längsbeweglich aufgenommen und beispielsweise mit einem Isoliermaterial 16 ausgekleidet.

An der Außenseite der Wand 14 des Reaktorbehälters 10 bzw. an diese anschließend ist die erwähnte Anschlusskammer 60 mit dem Kühlpaneel 61 angeordnet, die in Bezug auf Figuren 5A und 5B weiter näher erläutert wird.

An den stabförmigen Abschnitt 43 schließt sich im dargestellten Beispiel ein weiterer stabförmiger Abschnitt 45 an, dessen Temperatur mit zunehmendem Abstand zum Reaktorbehälter 10 insbesondere aufgrund der Kühlung mittels des Kühlpaneels 61, zunehmend sinkt. Der weitere stabförmige Abschnitt geht in einen Stromeinspeisezapfen 46 über, an den zwei Verbindungselemente 66, beispielsweise in Form von Litzen, zum Anschluss der Phasen U,V,W angebracht sind.

Figuren 5A und 5B zeigen Teilansichten von Reaktoren 100 mit Anschlusskammern 60 gemäß Ausgestaltungen der vorliegenden Erfindung im Längsschnitt (Figur 5A) und Querschnitt (Figur 5B), wobei im Querschnitt (Figur 5B) lediglich einige ausgewählte Elemente veranschaulicht sind und die Anzahl der dargestellten Elemente einander nur aus Gründen der Veranschaulichung der allgemeineren Anwendbarkeit nur teilweise entspricht. Die Figuren 5A und 5B sind insbesondere insoweit stark vereinfacht, als in realen Reaktoren eine deutlich größere Anzahl der hier jeweils veranschaulichten Elemente bereitgestellt sein kann.

Wie insbesondere aus Figur 5A ersichtlich, verlaufen die stabförmigen Abschnitten 43 der Stromeinspeiseelemente jeweils an den Wanddurchtritten 15 durch die Wand 14 des Reaktorbehälters 10. Außerhalb des Reaktorbehälters 10 und anschließend an die Wand 14 des Reaktorbehälters 10, durch die die stabförmigen Abschnitte 43 an ihren Wanddurchtritten 15 verlaufen, ist die Anschlusskammer 60 angeordnet, in die die stabförmigen Abschnitte 43 hineinragen.

In der Anschlusskammer 60 sind Kühlpaneele 61 bereitgestellt und wie insbesondere aus Figur 5B ersichtlich angeordnet. Diese sind mit einem Kühlfluid durchströmbar und zwischen zumindest zwei oder zwischen zumindest zwei Gruppen der stabförmigen Abschnitte 43, die in die Anschlusskammer 60 hineinragen, angeordnet.

Die Anschlusskammer 60 weist Seitenwände 62 auf, die sich jeweils senkrecht zu der Wand 14 des Reaktorbehälters 10, durch die die stabförmigen Abschnitte 43 verlaufen, erstrecken, wobei, wie aus Figur 5B ersichtlich und in Figur 5A nicht gesondert dargestellt, ein oder mehrere weitere Kühlpaneele 63 auch an zumindest einer der Seitenwände 62 angeordnet sein können.

Die Anschlusskammer 60 weist eine Parallelwand 64 auf, die in Figur 5A dargestellt ist und sich parallel zu der Wand 14 des Reaktorbehälters 10, durch die die stabförmigen Abschnitte 43 verlaufen, erstreckt, wobei die Parallelwand 64 zumindest in einem Abschnitt als Hohlwand ausgebildet und ebenfalls zur Durchströmung mit einem Kühlfluid eingerichtet ist. Die Anschlusskammer 60 ist ohne Einrichtungen zur Bereitstellung einer erzwungenen Konvektion in einer die Kühlpaneele 61 und die stabförmigen Abschnitte 43 umgebenden Gasatmosphäre 65 ausgebildet.

In der Anschlusskammer 60 sind an die stabförmigen Abschnitte 43 in Figur 5A als Litzen 66 veranschaulichte flexible Verbindungselemente angebunden, die mit einem nicht an die stabförmigen Abschnitte 43 angebundenen Ende an unbeweglich in der Anschlusskammer 60 angeordneten starren Kontaktelementen 67, die hier in isolierenden Aufnahmen im Boden 64 (ohne nähere Bezeichnung), befestigt sind.

Bei Crackeröfen werden können neben den zuvor in den Figuren 1 und 2 gezeigten Reaktionsrohren 20, die üblicherweise als 6-Passagen-Coils bezeichnet werden, und die sechs gerade Rohrstrecken 21 mit zwei 180°-Krüm mern, d.h. Umkehrbögen 23, oben bzw. in dem zweiten Bereich 12 und drei 180°-K rümmern, d.h. Umkehrbögen 23, unten bzw. in dem ersten Bereich 11 (letztere mit entsprechenden Stromeinspeiseanordnungen) aufweisen, auch Varianten mit weniger Passagen verwendet werden. Zum Beispiel weisen sogenannte 2-Passagen-Coils nur zwei gerade Rohrstrecken 21 und nur einen 180°-Krümmer bzw. Umkehrbogen 23 auf. Übertragen auf eine elektrische Beheizung kann diese Variante als eine Kombination von 6-Passagen-Crackerofen (Figuren 1 und 2) und Reformerofen (Figur 3, mit Reaktionsrohren ohne Umkehrbögen 23) angesehen werden:

Die Stromeinspeisung kann jeweils an einer Stelle pro Reaktionsrohr 21 am unteren (bzw. einzigen) Umkehrbogen stattfinden. Jeweils M Reaktionsrohre können elektrisch miteinander gekoppelt sein, mit einer Phasenverschiebung um 360°/M und mit einem gemeinsamen Verbindungselement 30. Dabei kann in einer ersten Alternative pro Coil-Paket bzw. für alle jeweils betrachteten Reaktionsrohre 20 ein besonders großes Verbindungselement 30 verwendet werden. In einer zweiten Alternative ist aber auch der Einsatz von zwei kleiner dimensionierten Verbindungselementen 30 möglich.

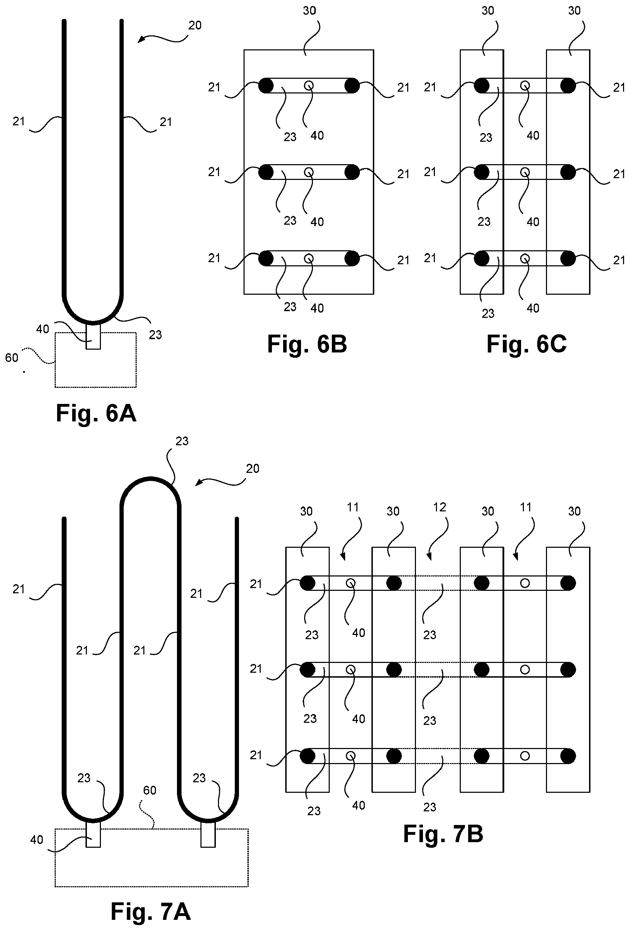

Die soeben erläuterte erste Alternative ist in Figur 6B, die soeben erläuterte zweite Alternative in Figur 6C in einer Querschnittsansicht durch die Rohrstrecken 21 veranschaulicht, wobei ein entsprechendes Reaktionsrohr 20 in einer Ansicht senkrecht zu den Ansichten der Figuren 6B und 6C in Figur 6A dargestellt ist. Zur Bezeichnung der entsprechenden Elemente sei auf die Figur 1 verwiesen. Es versteht sich, dass das oder die Verbindungselemente 30 mit den dort ggf. angeordneten Umkehrbögen 23 einerseits und die anderen Umkehrbögen 23 andererseits mit den Anschlüssen an die Phasen U, V, W über die Stromeinspeiseanordnungen 40 (hier stark vereinfacht gezeigt) in unterschiedlichen Ebenen, entsprechend dem ersten und dem zweiten Bereich 11, 12 eines Reaktors, angeordnet sind. Wiederum sei betont, dass Vorhandensein und Anordnung der Verbindungselemente 30 im Rahmen der vorliegenden Erfindung rein optional bzw. beliebig ist.

Entsprechend kann dieses Konzept auch auf Coils bzw. Reaktionsrohre 20 mit vier Passagen bzw. Rohrstrecken 21 (sogenannte 4-Passagen-Coils) angewandt werden, in diesem Fall mit einer, zwei oder vier Sternbrücken bzw. Verbindungselementen 30. Ein entsprechendes Beispiel ist in den Figuren 7A und 7B dargestellt, wobei in Figur 6B vier Verbindungselemente 3 dargestellt sind. Zur besseren Veranschaulichung sind die Umkehrbögen 23 hier gestrichelt (Umkehrbögen in dem zweiten Bereich 12 des Reaktors) und ungestrichelt (Umkehrbögen in dem ersten Bereich 11) dargestellt. Die Elemente sind der Übersichtlichkeit halber nur teilweise mit Bezugszeichen versehen.

Die Anschlusskammern 60 sind in den in den Figuren 6A bis 6C und 7A sowie 7B veranschaulichten Ausgestaltungen wie grundsätzlich erläutert ausgebildet und daher hier nur stark schematisiert veranschaulicht.

Auf die Figuren 8A bis 8C, die weitere Reaktionsrohre zur Verwendung in einem Reaktor gemäß einer Ausgestaltung der Erfindung veranschaulichen, wurde bereits zuvor Bezug genommen. Die Reaktionsrohre und Rohrabschnitte sind hier nur jeweils teilweise mit Bezugszeichen versehen. Einspeise- und Entnahmeabschnitte ergeben sich durch die dargestellten Flusspfeile. Die Stromeinspeiseanordnungen 40 bzw. Anschlusskammern 60, die insbesondere in der zuvor erläuterten Weise ausgebildet sein können, sind stark vereinfacht gestrichelt angedeutet.

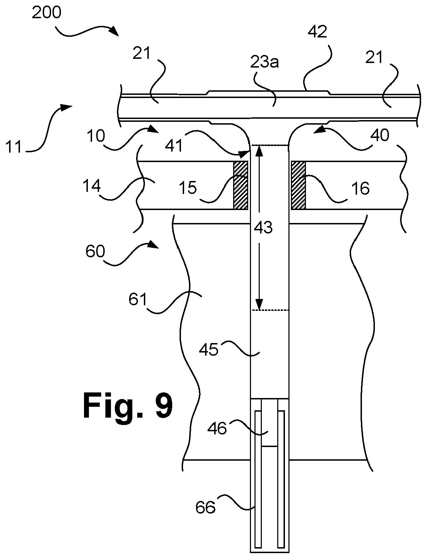

Figur 9 zeigt eine Ausschnittsdarstellung des ersten Bereichs 11 eines Reaktors 200, wobei die jeweils gezeigten Elemente bereits im Zusammenhang mit Figur 4 erläutert wurden. Im Unterschied zu Figur 4 weist das Reaktionsrohr 20 allerdings hier keinen Umkehrbogen auf und die Rohrstrecken 21 sind entlang einer gemeinsamen Mittelachse angeordnet. Ein ungekrümmter Übergangsbereich ist mit 23a bezeichnet. Eine entsprechende Ausgestaltung kann beispielsweise anstelle einer Manschette in dem Reaktor 200 gemäß Figur 3 zum Einsatz kommen. Die Anordnung kann insbesondere auch an einer Seitenwand des Reaktors 200 angeordnet sein und ist dabei gegenüber Figur 9 um 90°gedreht.

Der Übergangsbereich 23a ist auch hier in einer Kontaktpassage 42 mit einer verstärkten Wandung ausgebildet, die sich an die zwei Rohrstrecken 21 in dem ersten Bereich 11 anschließt. Zu weiteren Erläuterungen wird auf Figur 4 verwiesen. Der Wanddurchtritt 15 auch hier übertrieben breit dargestellt. Der stabförmige Abschnitt ist in dem Wanddurchtritt 15 auch hier längsbeweglich aufgenommen und beispielsweise mit einem geeigneten Isoliermaterial 16 ausgekleidet. Der Wanddurchtritt 15 kann abweichend zu der hier vorgenommenen Darstellung aber auch eine andere Ausgestaltung erfahren, insbesondere um weitere Bewegungsmöglichkeiten zu schaffen. Dies betrifft auch die optionale Balgenanordnung 44.

## Patentansprüche

1. Reaktor (100, 200) zur Durchführung einer chemischen Reaktion, der einen Reaktorbehälter (10) und ein oder mehrere Reaktionsrohre (20) aufweist, wobei in den Reaktorbehälter (10) Stromeinspeiseelemente (41) zur elektrischen Beheizung des oder der Reaktionsrohre (20) geführt sind, **dadurch gekennzeichnet, dass**
- die Stromeinspeiseelemente (41) jeweils einen stabförmigen Abschnitt (43) aufweisen, der an jeweils einem Wanddurchtritt (15) durch eine Wand (14) des Reaktorbehälters (10) verläuft,
- sich außerhalb des Reaktorbehälters (10) und anschließend an die Wand (14) des Reaktorbehälters (10), in welcher die Wanddurchtritte (15) ausgebildet sind, eine Anschlusskammer (60) befindet, in welche die stabförmigen Abschnitte (43) hineinragen,
- in der Anschlusskammer (60) Kühlelemente (61) bereitgestellt sind, die mit einem Kühlfluid durchströmbar sind, und die zwischen zumindest zwei oder zwischen zumindest zwei Gruppen der stabförmigen Abschnitte (43), die in die Anschlusskammer (60) hineinragen, angeordnet sind.

2. Reaktor (100, 200) nach Anspruch 1, bei dem eine Anzahl von Rohrstrecken (21, 22) des einen oder der mehreren Reaktionsrohre (20) jeweils zwischen einem ersten Bereich (11) und einem zweiten Bereich (12) in dem Reaktorbehälter (10) verlaufen, und wobei die Rohrstrecken (21, 22) in dem ersten Bereich (11) zur elektrischen Beheizung der Rohrstrecken (21, 22) jeweils elektrisch mit Stromanschlüssen (U, V, W) einer Stromquelle (50) verbunden oder verbindbar sind, wobei in dem ersten Bereich (11) Stromeinspeiseanordnungen (40) bereitgestellt sind, an die jeweils eine oder jeweils eine Gruppe der Rohrstrecken (21, 22) elektrisch angebunden ist, wobei die Stromeinspeiseanordnungen (40) jeweils eines der Stromeinspeiseelemente (41) mit den stabförmigen Abschnitten (43) aufweist, die jeweils an Wanddurchtritten (15) durch eine Wand (14) des Reaktorbehälters (10) verlaufen.

3. Reaktor (100, 200) nach Anspruch 1 oder 2, bei dem die Kühlpaneele (61) sich jeweils zwischen Grenzflächen, deren Abstand eine Dicke der Kühlpaneele (61) definiert, sowie entlang der Grenzflächen erstrecken, wobei die Erstreckung der Kühlpaneele (61) entlang der Grenzflächen mehr als das Doppelte, Fünffache, Zehnfache oder Zwanzigfache der Dicke der Kühlpaneele (61) beträgt.

4. Reaktor (100, 200) nach Anspruch einem der vorstehenden Ansprüche, bei dem die Grenzflächen, deren Abstand eine Dicke der Kühlpaneele (61) definiert, eben oder gekrümmt verlaufen.

5. Reaktor (100, 200) nach Anspruch 3 oder 4, bei dem wenigstens zwei der Kühlpaneele (61) um eine Achse, die parallel zu einer Längserstreckungsrichtung der stabförmigen Abschnitte (43) und senkrecht zu der Wand (14) des Reaktorbehälters (10) ist, zueinander verdreht sind.

6. Reaktor (100, 200) nach Anspruch 3, 4 oder 5, bei dem die Kühlpaneele (61) für eine Durchströmung mit dem Kühlfluid in einer Richtung, die senkrecht oder parallel zu einer Längserstreckungsrichtung der stabförmigen Abschnitte (43) ist, eingerichtet sind.

7. Reaktor (100, 200) nach einem der Ansprüche 3 bis 6, bei dem die Dicke der Kühlpaneele (61) in zumindest dem Abschnitt in einem Bereich von 0,5 cm bis 10 cm liegt.

8. Reaktor (100, 200) nach einem der vorstehenden Ansprüche, bei dem die Anschlusskammer (60) Seitenwände (62) aufweist, die sich senkrecht zu der Wand (14) des Reaktorbehälters, durch die die stabförmigen Abschnitte (43) verlaufen, erstrecken, wobei ein oder mehrere weitere Kühlpaneele (63) an zumindest einer der Seitenwände (62) angeordnet sind.

9. Reaktor (100, 200) nach einem der vorstehenden Ansprüche, bei dem die Anschlusskammer (60) eine Parallelwand (64) aufweist, die sich parallel zu der Wand (14) des Reaktorbehälters (10), durch die die stabförmigen Abschnitte (43) verlaufen, erstreckt, wobei die Parallelwand (64) zumindest in einem Abschnitt als Hohlwand ausgebildet und zur Durchströmung mit dem oder mit einem weiteren Kühlfluid eingerichtet ist.

10. Reaktor (100, 200) nach einem der vorstehenden Ansprüche, bei dem die Anschlusskammer (60) ohne Einrichtungen zur Bereitstellung einer erzwungenen Konvektion in einer die Kühlpaneele (61) und die stabförmigen Abschnitte (43) umgebenden Gasatmosphäre (65) ausgebildet ist.

11. Reaktor (100, 200) nach einem der vorstehenden Ansprüche, bei dem die Anschlusskammer (60) mit Ausnahme der Wand (14) des Reaktorbehälters (10), die eine Wand der Anschlusskammer (60) bildet, gasdicht ausgebildet ist.

12. Reaktor (100, 200) nach einem der vorstehenden Ansprüche, bei dem in der Anschlusskammer (60) an die stabförmigen Abschnitte (43) Verbindungselemente mit Kupferanteilen angebunden sind, und/oder flexible Verbindungselemente (66) angebunden sind, die mit einem nicht an die stabförmigen Abschnitte (43) angebundenen Ende mit unbeweglich in der Anschlusskammer (60) angeordneten starren Kontaktelementen befestigt sind.

13. Reaktor (100, 200) nach einem der vorstehenden Ansprüche, bei dem die in den Kühlraum ragenden stabförmigen Abschnitte (43) dort jeweils einen Querschnitt aufweisen, der zumindest teilweise nicht weniger als 10 Quadratzentimeter beträgt.

14. Reaktor (100, 200) nach einem der vorstehenden Ansprüche, der als Reaktor (100) zum Steamcracken oder als Reaktor (200) zur Dampfreformierung, zur Trockenreformierung oder zur katalytischen Dehydrierung von Alkanen ausgebildet ist.

15. Verfahren zur Durchführung einer chemischen Reaktion unter Verwendung eines Reaktors (100, 200), der einen Reaktorbehälter (10) und ein oder mehrere Reaktionsrohre (20) aufweist, wobei in den Reaktorbehälter (10) Stromeinspeiseelemente (41) zur elektrischen Beheizung des oder der Reaktionsrohre (20) geführt sind, **dadurch gekennzeichnet, dass** ein Reaktor (100, 200) verwendet wird, bei dem
- die Stromeinspeiseelemente (41) jeweils einen stabförmigen Abschnitt (43) aufweisen, der jeweils an einem Wanddurchtritt (15) durch eine Wand (14) des Reaktorbehälters (10) verläuft,
- außerhalb des Reaktorbehälters (10) und anschließend an die Wand (14) des Reaktorbehälters (10) durch die die stabförmigen Abschnitte (43) an ihren Wanddurchtritten (15) verlaufen, eine Anschlusskammer (60) angeordnet ist, in die die stabförmigen Abschnitte (43) hineinragen,
- in der Anschlusskammer (60) Kühlpaneele (61) bereitgestellt sind, die mit einem Kühlfluid durchströmbar sind, und die zwischen zumindest zwei oder zwischen zumindest zwei Gruppen der stabförmigen Abschnitte (43), die in die Anschlusskammer hineinragen, angeordnet sind.
